(19) Europäisches Patentamt

European Patent Office

Office européen des brevets

(11) Numéro de publication : **0 065 453**
**B1**

(12) **FASCICULE DE BREVET EUROPÉEN**

(45) Date de publication du fascicule du brevet :
**20.02.85**

(21) Numéro de dépôt : **82400825.4**

(22) Date de dépôt : **05.05.82**

(51) Int. Cl.⁴ : **F 28 F 1/04**, F 28 F 1/22,
F 28 D 3/02, F 28 F 19/06,
F 25 D 17/02

(54) Echangeur de chaleur à nappe de tubes métalliques.

(30) Priorité : **05.05.81 FR 8108846**

(43) Date de publication de la demande :
**24.11.82 Bulletin 82/47**

(45) Mention de la délivrance du brevet :
**20.02.85 Bulletin 85/08**

(84) Etats contractants désignés :
**BE CH DE FR GB IT LI NL SE**

(56) Documents cités :
**EP-A- 0 010 817**
**CH-A- 182 808**
**DE-A- 2 649 872**
**DE-A- 2 921 908**
**DE-C- 183 101**
**DE-C- 827 655**
**FR-A- 866 806**
**FR-A- 1 573 193**
**FR-A- 2 407 448**
**FR-A- 2 439 954**
**GB-A- 299 100**
**GB-A- 886 194**
**US-A- 2 997 861**
**US-A- 3 285 334**
**US-A- 3 727 681**
**US-A- 4 101 287**

(73) Titulaire : **ELECTRICITE DE FRANCE Service National
2, rue Louis Murat
F-75008 Paris (FR)**

**Charles, Robert
4, Esplanade O. Médale
F-81370 Saint Sulpice (FR)**

(72) Inventeur : **Charles, Robert
4, Esplanade O. Médale
F-81370 Saint Sulpice (FR)**
Inventeur : **Chapelle, Jules
2, rue Louis Murat
F-75008 Paris (FR)**

(74) Mandataire : **Fort, Jacques et al
CABINET PLASSERAUD 84, rue d'Amsterdam
F-75009 Paris (FR)**

Jouve, 18, rue St-Denis, 75001 Paris, France

## Description

L'invention a pour objet un échangeur de chaleur délimité par deux surfaces parallèles, comportant un faisceau de tubes métalliques parallèles reliés de façon à constituer un circuit pour un premier fluide et imbriqués au moins avec un faisceau d'organes métalliques allongés en contact thermique avec les tubes et avec un second fluide, formant une nappe avec les tubes.

On connaît déjà des échangeurs de chaleur de ce type. Les organes allongés peuvent notamment être constitués par des tubes appartenant à un circuit pour le second fluide ou par des ailettes en contact thermique avec un fluide ambiant, tel que l'atmosphère. Ces échangeurs utilisent en règle générale des tubes cylindriques. On sait par ailleurs qu'on peut protéger de tels tubes contre la corrosion par revêtement d'un métal de protection tel que le chrome (GB-A-299 100). On connaît par ailleurs (DE-C-827 655) un refroidisseur à écoulement constitué par un faisceau plat de tubes rectangulaires, en contact les uns avec les autres, parcourus tous par le même fluide. Les faces externes plates du faisceau sont recouvertes chacune par une tôle mince de matériau résistant à la corrosion, fixée aux tubes par des moyens assurant une bonne conduction thermique. Ce brevet ne prévoit nulle part de relier les tubes entre eux par zingage ou autrement : ce refroidisseur ne présente pas de problème d'écoulement thermique entre les tubes, puisque tous sont parcourus par le même fluide.

L'invention vise à fournir un échangeur répondant mieux que ceux antérieurement connus aux exigences de la pratique, notamment en ce qu'il permet de réaliser des échangeurs de chaleur qui, tout à la fois, ont un coût modéré, ont un coefficient d'échange élevé entre fluides et une résistance élevée à la corrosion et, en particulier, aux agents atmosphériques.

Dans ce but, l'invention propose notamment un échangeur du genre ci-dessus défini dont les tubes sont de section rectangulaire et en contact avec les organes allongés adjacents par toute la surface de faces plates en regard desdits tubes et desdits organes et en ce que lesdits tubes et lesdits organes allongés sont en acier, protégés contre les corrosions d'origine externe et reliés thermiquement entre eux par une galvanisation à chaud fournissant une liaison métallurgique entre tubes et organes allongés.

L'échangeur présente ainsi une constitution monocouche, chaque premier tube ayant deux faces opposées libres et deux surfaces en contact avec les tubes adjacents. Il est important que les tubes en acier soient protégés sur leurs quatre faces contre les corrosions d'origine externe et reliés thermiquement avec les organes allongés adjacents par une galvanisation à chaud. Cette galvanisation remplit plusieurs fonctions distinctes : la durée de vie de l'échangeur est considérablement augmentée, y compris lorsque l'échangeur est exposé aux agents atmosphériques, à un point tel qu'une garantie décennale est possible. Du fait de la conductibilité thermique élevée du zinc (double de celle du fer), le coefficient d'échange thermique entre les tubes et les organes allongés devient très satisfaisant. On peut toutefois utiliser un matériau autre que l'acier, notamment un métal apte à être mis en forme par filage à la presse (aluminium et alliages légers par exemple).

L'invention trouve une application particulièrement importante, bien que non exclusive, dans les installations de fourniture d'eau chaude comprenant un circuit thermodynamique parcouru par un fluide frigorigène (fluide B) et dont la source froide comporte un échangeur solaire. L'échangeur de chaleur suivant l'invention peut dans ce cas être utilisé notamment comme échangeur-évaporateur, auquel cas les seconds tubes sont parcourus par le fluide frigorigène, tandis que les premiers tubes sont parcourus par le fluide non solidifiable de la source froide (fluide A). L'échangeur peut être utilisé comme échangeur atmosphérique, les organes pouvant comporter des ailettes profilées, présentant des surfaces de même largeur que les tubes, prévues pour s'appliquer sur ces tubes.

Un échangeur suivant l'invention est particulièrement intéressant comme évaporateur dans une installation du genre décrit dans la demande de brevet EP-A-0 042 795, qui appartient à l'état de la technique selon l'article 54 (3) de la C.B.E.

Dans cette installation, de la glace peut se former sur des surfaces d'un échangeur de chaleur, la chaleur latente de cette glace étant fournie à un circuit parcouru par un fluide caloporteur incongelable (fluide A) provenant soit d'échangeurs solaires, soit d'une capacité contenant du fluide chaud destiné à décoller la glace. On peut faire ruisseler de l'eau sur l'échangeur pour décoller la glace.

L'invention sera mieux comprise à la lecture de la description de modes particuliers de réalisation de celle-ci, donnés à titre d'exemples non limitatifs. La description se réfère aux dessins qui l'accompagnent, dans lesquels :

les figures 1 et 2 sont des schémas de principe montrant, en coupe suivant un plan perpendiculaire à l'axe des tubes, un fragment d'un échangeur de chaleur à deux jeux de tubes (figure 1) et à deux jeux de tubes et un jeu d'ailettes (figure 2) ;

la figure 3 est un schéma de principe en élévation montrant une nappe d'échangeur de chaleur destiné à constituer capteur atmosphérique, placée en façade ;

la figure 4 est un schéma de principe montrant les liaisons entre les tubes d'un échangeur à deux jeux de tubes, de façon à constituer un échangeur évaporateur pour installation thermodynamique de fourniture d'eau avec ruissellement, sur les deux faces, d'un fluide C (par exemple eau), du genre décrit dans la demande de brevet EP-A-0 042 795, l'eau étant puisée dans un bac et destinée à se glacer sur les parois pour céder sa chaleur latente au fluide B, le déglaçage étant programmé dans le cycle ;

les figures 5 et 6 sont des vues en élévation montrant respectivement les connexions à la partie droite et à la partie gauche d'un échangeur suivant le schéma de la figure 3 ;

la figure 7 est une vue en coupe de l'échangeur des figures 5 et 6 ;

la figure 8 est une vue de dessus de la figure 5 ;

la figure 9 est un schéma en perspective montrant une variante de la figure 3, l'échangeur n'étant plus plan mais de forme cylindrique, à deux circuits en tubes carrés en hélices imbriquées ;

les figures 10 et 11 sont respectivement une vue en élévation et une vue de dessus du fragment XI (figure10) d'un échangeur conforme au schéma de la figure 9.

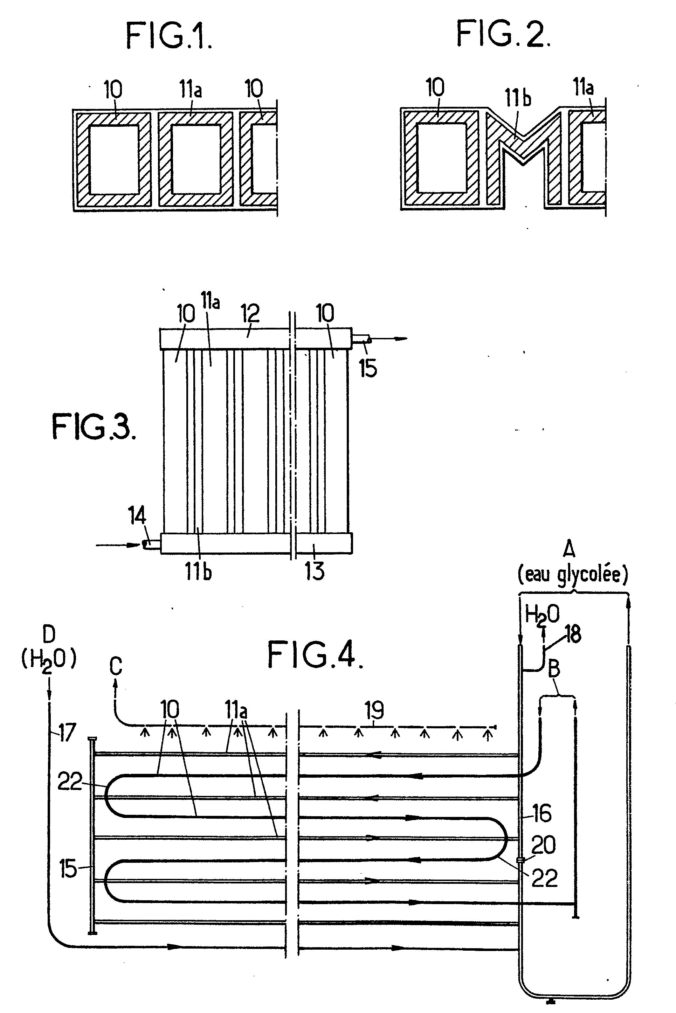

On décrira tout d'abord, en faisant référence à la figure 1, puis à la figure 2, la constitution courante de deux variantes d'échangeur suivant l'invention.

Dans les deux cas, l'échangeur comprend une nappe plane comportant des tubes métalliques 10 alternés avec des organes allongés. Dans le cas de la figure 1, ces organes allongés sont constitués par des tubes 11a identiques aux tubes 10. Dans le cas de la figure 2, ces organes allongés comportent également des ailettes profilées 11b de même largeur que les tubes. Les tubes sont en acier, de forme rectangulaire, et traités par galvanisation à chaud. Ce traitement, avantageusement appliqué à de l'acier (exempt de silicium), peut notamment comporter successivement un dégraissage, un décapage à l'acide chlorhydrique à 50 %, un double rinçage, un traitement par un flux constitué par un sel double d'ammonium et de zinc, un préchauffage à 110 °C environ et une immersion dans une cuve de zinc en fusion à 450 °C environ. Les opérations de rinçage et de fluxage sont spécialement reprises au jet sous pression de manière à chasser toute trace d'acide et pénétrer au droit des interstices entre tubes.

L'association de ce type de préparation et d'une immersion dans le zinc à cette température conduit à une dissolution de la couche superficielle du fer par le zinc. On trouve ainsi successivement, de l'intérieur vers l'extérieur du tube et sans interface, le fer, puis un alliage fer-zinc, puis du zinc contenant du fer en solution, puis le zinc. En règle générale, on réalisera une couche de 80 microns environ d'épaisseur, sur les quatre faces des tubes.

Cette galvanisation à chaud permet non seulement de protéger les tubes, mais encore d'améliorer les transferts thermiques. Par exemple dans le cas illustré en figure 1, les tubes 10 et 11a, parcourus par les fluides entre lesquels on cherche à favoriser les échanges thermiques, sont véritablement « soudés » par le zinc de revêtement. Le couplage thermique est donc excellent. On a en particulier, grâce au traitement spécial au jet haute pression, une meilleure pénétration du flux et du zinc pour assurer et garantir un remplissage et une obturation hermétique des interstices entre tubes, chaque face en regard étant complètement recouverte de zinc. De la sorte, on obtient une liaison thermique sans interface ou la constitution d'une cavité vide d'air, étanche, parfaitement conductrice de la chaleur. Non seulement les échanges thermiques se font avec une résistance faible, mais la protection contre les corrosions externes est très élevée.

Il faut de plus remarquer que les circuits constitués par des tubes continus peuvent résister à une pression très élevée, de l'ordre de 50 bars, sans dommage, et que la constitution de l'échangeur de chaleur en deux faisceaux étanches distincts assure une grande sécurité lorsque l'un des fluides utilisés est corrosif ou réagit de façon violente en cas de contact avec l'autre fluide. Cette disposition est imposée dans le cas d'une installation domestique.

Dans la réalisation montrée en figure 2, les organes allongés comprennent un jeu d'ailettes en profilé ou tôle pliée dont la section est en forme de M. Là encore, l'acier des ailettes est recouvert par une couche obtenue par galvanisation à chaud, couche qui améliore les transferts thermiques entre ailettes 11b et tubes 10 et 11a.

On peut ainsi réaliser un échangeur de chaleur entre trois fluides ou même davantage : deux des fluides circulent dans deux faisceaux de tubes distincts, tandis que le troisième fluide baigne l'échangeur ou ruisselle sur ses faces. Un quatrième fluide peut être injecté à contre-courant pour provoquer un changement d'état de l'un des autres fluides en présence.

Les jonctions entre les tubes dépendront évidemment de l'application qui est faite de l'échangeur.

Lorsque, par exemple, on souhaite réaliser un capteur ou échangeur atmosphérique, destiné à être posé en façade, une nappe du genre montré en figure 3 peut être reliée à un collecteur haut 12 et un collecteur bas 13 dans lesquels débouchent en parallèle les tubes 10. Les conduites d'admission 14 et d'échappement 15 des collecteurs peuvent être reliées en série ou en parallèle jusqu'à constituer la surface d'échange requise.

Un tel échangeur de chaleur est notamment utilisable en tant que capteur atmosphérique dans une installation de fourniture d'eau chaude du genre décrit dans la demande de brevet EP-A-0 042 795.

Un échangeur à deux faisceaux de tubes, du genre montré en figure 1, peut être utilisé pour constituer l'échangeur évaporateur d'une installation à circuit thermodynamique du genre décrit et revendiqué par la demande de brevet n° EP-A-0 042 795 déjà mentionnée. Un tel échangeur évaporateur est particulièrement intéressant dans le cas d'une installation du genre montré en figure 3 de la demande antérieure précitée, installation constituant une fabrique de glace quand l'apport d'énergie solaire à l'échangeur constituant la source froide devient insuffisant.

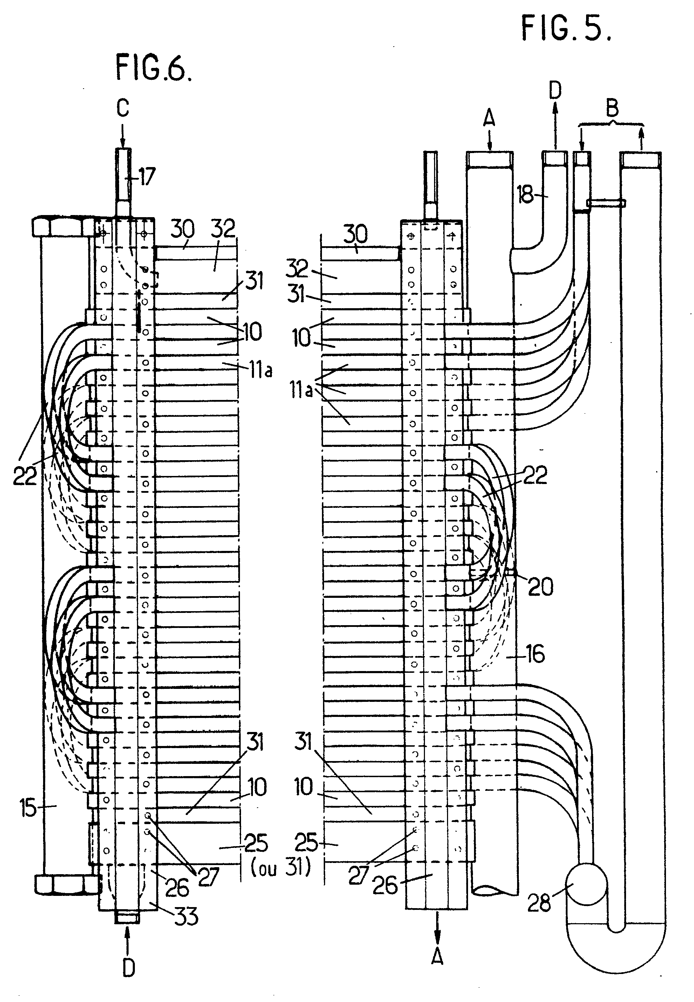

La figure 4 montre le schéma d'un échangeur-évaporateur utilisable dans une telle installation, à géométrie plane. Les tubes 10 sont reliés en série-parallèle pour constituer le circuit de fluide B thermodynamique vaporisable (fluide fluoré tel que celui désigné par la marque « FREON » en général) dans l'échangeur. Les tubes 11a sont montés entre deux collecteurs 15 et 16 pour constituer un circuit de circulation d'eau additionnée d'un antigel tel que le glycol (fluide A). Ce circuit se refermera par l'intermédiaire de la source froide qui peut être un capteur solaire ou un capteur atmosphérique. L'échangeur est complété par un circuit d'amenée d'eau chaude de fusion de glace (fluide D). Dans le cas d'un montage du type illustré en figures 5 à 8, ce fluide D pénètre par une tubulure 33 dans un tube mort raidisseur inférieur 31 (figure 6), chemine à contre-courant dans les tubes 10 et ressort par une tubulure 18 (figures 4 et 5a).

Enfin, l'échangeur est associé à une rampe de ruissellement 19 placée au-dessus, alimentée par la tubulure 17, par une pompe de relevage non représentée et permettant de déverser sur les tubes de l'eau qui s'y transforme en glace en fournissant de la chaleur sous forme de chaleur latente de solidification lorsque la température de la source froide atmosphérique est particulièrement basse.

Tel que représenté sur la figure 4, le collecteur 16 constitue une boîte à eau cloisonnée en 20 tandis que le collecteur 15 reboucle tous les tubes aller 10 sur tous les tubes retour 10. Les tubes 11a du circuit de fluide frigorigène sont identiques aux tubes 10 et, à titre d'exemple, on a représenté un tube 10 pour chaque tube 11a. Les « épingles » de circulation du fluide frigorigène (fluide B) peuvent ne pas comporter tous les tubes successifs. Dans le cas général de m épingles comportant chacune n tubes 11a, on devra avoir $(m + 1)n$ tubes 11a et $(m + 1) n + 1$ tubes 10. La mise en série des branches d'une même épingle destinée au fluide frigorigène est assurée par coudage à 180° des tubes, le coude étant placé obliquement par rapport au plan général du faisceau pour permettre le passage des tubes 10 rejoignant leur boîte à eau. L'ensemble du faisceau peut être lié et raidi par des réglettes en tôle pliée, soudées par points sur les tubes. Le circuit de circulation d'eau de décollage de la glace peut utiliser des tubes morts ou des tubes raidisseurs.

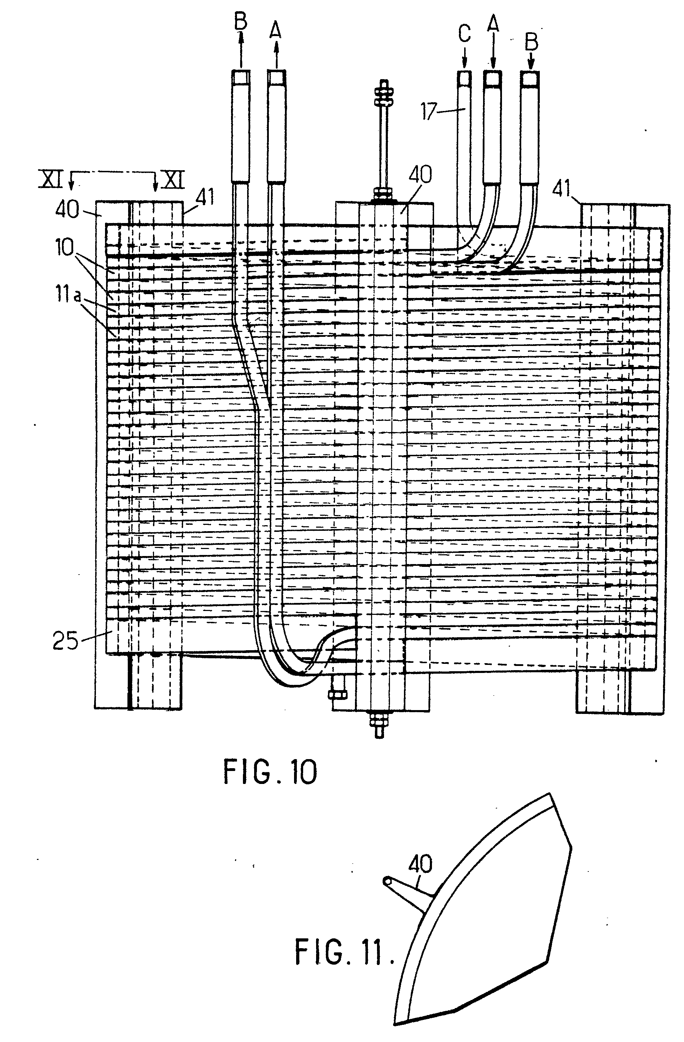

Au lieu d'une disposition plane, on peut utiliser des dispositions cylindriques ou même en U des tubes. Les figures 9-11 montrent une disposition cylindrique, particulièrement intéressante pour constituer des modules ayant une puissance unitaire inférieure à 6 kW (maisons individuelles). L'échangeur est alors constitué par un appareil de forme cylindrique constitué de deux hélices imbriquées jointives constituées l'une par un tube 10, l'autre par un tube 11a. Ces hélices sont accolées suivant une face du tube carré ou rectangulaire et l'ensemble des tubes est lié thermiquement par galvanisation à chaud traitée spécialement. Un circuit de ruissellement et un circuit de décollage de glace similaires à ceux de la figure 5 sont prévus. Les ailettes internes et externes sont conçues et réalisés de façon que la glace tombe verticalement lors des cycles de déglaçage.

Des profils de liaison externes 40 et internes 41 assurent la cohésion de la structure.

A titre d'exemple, on peut constituer un appareil du genre montré en figure 9 pour une puissance unitaire de 4 kW ayant un diamètre de 70 cm et une hauteur d'environ 50 cm.

On décrira maintenant de façon détaillée une constitution d'échangeur dont le schéma est celui de la figure 4 et qui est destiné à une installation de fourniture d'eau chaude. Cet échangeur évaporateur est montré en figures 5 à 8 où les organes déjà montrés en figure 4 sont désignés par le même numéro de référence.

L'échangeur représenté, ayant une puissance thermique de 6 kW, présente un circuit de fluide frigogène (B) et un circuit d'eau additionnée d'antigel (A) constitués en tubes à section carrée de 16 mm de côté galvanisés à chaud. La rigidité mécanique de l'échangeur est assurée par des raidisseurs 25 et des profilés de liaison 26 fixés les uns aux autres par des points de soudure tels que 27. Certains des tubes de liaison de l'échangeur avec le reste de l'installation peuvent être filetés de façon à permettre de suspendre l'appareil.

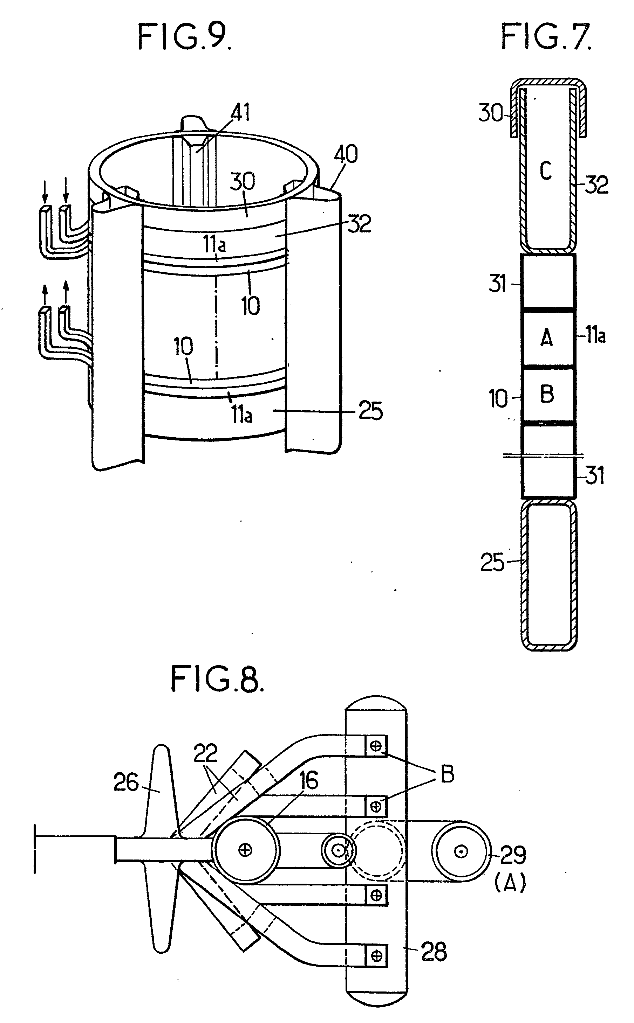

Les tubes 10 et 11a sont solidarisés des profilés 26 par des points de soudure. Comme le montrent notamment les figures 5a, 6 et 8, les coudes 22 reliant les branches aller et retour des épingles parcourues par le fluide frigorigène sont décalés angulairement du plan des tubes. Dans le mode de réalisation illustré, le circuit de fluide frigorigène comporte $m = 3$ épingles de $n = 4$ tubes, ce qui conduit à plusieurs décalages angulaires différents des coudes (figure 8). Tous les quatre tubes d'extrémité de la troisième épingle débouchent dans un même collecteur 28 d'où part la conduite 29 de sortie du fluide.

L'échangeur évaporateur, étant destiné à une installation du genre « fabrication de glace » décrite dans la demande EP-A-0 042 795, est complété par une gouttière 32 de ruissellement de l'eau puisée dans la réserve d'eau, entrant dans la conduite d'amenée 17, et par un diffuseur 30. Ce dernier répartit de façon sensiblement uniforme l'eau sur les parois de l'échangeur en vue de la formation de glace. Enfin, des tubes morts 31 sont prévus soit pour constituer le circuit d'eau de décollage de la glace, soit pour constituer des zones de l'échangeur sur lesquelles il n'y a pas formation de glace.

## Revendications

1. Echangeur de chaleur délimité par deux surfaces parallèles, comportant un faisceau de tubes métalliques parallèles reliés de façon à constituer un circuit pour un premier fluide et imbriqués au moins avec un faisceau d'organes métalliques allongés en contact thermique avec les tubes (10) et avec un second fluide, formant une nappe avec les tubes, caractérisé en ce que les tubes (10) sont de section rectangulaire et en contact avec les organes allongés adjacents (11a, 11b) par toute la surface de faces plates en regard desdits tubes et desdits organes et en ce que lesdits tubes (10) et lesdits organes allongés (11a, 11b) sont en acier, protégés contre les corrosions d'origine externe et reliés thermiquement entre eux par une galvanisation à chaud fournissant une liaison métallurgique entre tubes et organes allongés.

2. Echangeur de chaleur selon la revendication 1, caractérisé en ce que ledit échangeur est prévu pour des transferts de chaleur avec au moins un fluide supplémentaire (fluide C ou D) circulant autour de l'échangeur ou dans un faisceau de tubes supplémentaires imbriqués avec les organes métalliques.

3. Echangeur de chaleur selon la revendication 1 ou 2, caractérisé en ce que lesdites surfaces parallèles sont sensiblement verticales lors de l'utilisation et sont planes.

4. Echangeur de chaleur suivant la revendication 1 ou 2, caractérisé en ce que les surfaces parallèles de l'échangeur sont sensiblement verticales et au moins partiellement cylindriques, de façon à réaliser une disposition en U ou en cylindre, les tubes et organes allongés étant enroulés en hélice.

5. Echangeur selon l'une quelconque des revendications précédentes, caractérisé en ce que les organes allongés comportent des tubes rectangulaires supplémentaires supérieur à deux.

6. Echangeur selon l'une quelconque des revendications précédentes, caractérisé en ce que les organes allongés comprennent des ailettes en profilés ou tôles pliées (11b) ayant deux faces plates en contact avec les tubes adjacents.

7. Echangeur de chaleur selon l'une quelconque des revendications précédentes, destiné à être placé en position sensiblement verticale lors de l'utilisation, caractérisé en ce que des moyens sont prévus pour former, sur les surfaces verticales, de la glace dont la chaleur latente est fournie à un circuit thermodynamique pour lequel le circuit de premier fluide constitue évaporateur.

8. Echangeur de chaleur selon l'une quelconque des revendications précédentes, à surfaces verticales, caractérisé en ce qu'il apporte, à sa partie supérieure, un canal destiné à alimenter en eau de ruissellement les surfaces verticales de l'échangeur pendant des périodes où l'on doit former de la glace sur les surfaces.

9. Echangeur selon la revendication 8, intégré à une installation de chauffage à pompe de chaleur dont il constitue l'évaporateur parcouru par un fluide thermodynamique constituant le premier fluide, caractérisé en ce que les seconds tubes sont placés dans un circuit parcouru par un fluide caloporteur incongelable en provenance d'échangeurs solaires ou d'une capacité contenant un fluide chaud destiné à décoller la glace des surfaces de l'échangeur.

**Claims**

1. Heat exchanger defined by two parallel surfaces, comprising a bundle of parallel metal tubes connected for constituting a circuit for a first fluid and interleaved with at least one bundle of elongated metal elements in thermal contact with the tubes (10) and with a second fluid, constituting a layer with the tubes, characterized in that the tubes (10) have a rectangular cross section and are in contact with the adjacent elongated elements (11a, 11b) over the whole areas of confronting flat surfaces of said tubes and said elements and in that said tubes (10) and said elongated elements (11a, 11b) are of steel, are protected against external corrosion and mutually thermally connected by not galvanization which provides a metallurgical bond between tubes and elongated elements.

2. Heat exchanger according to claim 1, characterized in that said exchanger is provided for heat transfer with at least one supplementary fluid (fluid C or D) circulating around the exchanger or in a bundle of supplementary tubes interleaved with the metal elements.

3. Heat exchanger according to claim 1 or 2, characterized in that said parallel surfaces are substantially vertical in use and are planar.

4. Heat exchanger according to claim 1 or 2, characterized in that the parallel surfaces of the exchanger are substantially vertical and at least partially cylindrical, for providing a U-shaped or cylindrical arrangement, the tubes and elongated elements being spirally wounded.

5. Exchanger according to any one of the preceding claims, characterized in that the elongated elements comprise supplementary rectangular tubes for circulation of a number of fluids greater than two through the exchanger.

6. Exchanger according to any one of the preceding claims, characterized in that the elongated elements comprise fins formed by extruded elements or folded sheets (11b) having two flat surfaces in contact with the adjacent tubes.

7. Heat exchanger according to any of the preceding claims, for being located substantially vertically in use, characterized in that means are provided for forming ice on the vertical surfaces, the latent heat of said ice being delivered to a thermodynamical circuit for wich the circuit of the first fluid constitutes an evaporator.

8. Heat exchanger according to any one of the preceding claims, having vertical surfaces, characterized in that it comprises a channel located at its upper portion and arranged for delivering water wich runs along the vertical surfaces of the exchanger during the time periods when ice should be generated on the surfaces.

9. Exchanger according to claim 8, incorporated in a heat pump heating apparatus and constituting the evaporator through which a thermodynamical fluid constituting the first fluid is circulated, characterized in that the second tubes are located in a circuit through which a non-freezable heat carrying fluid, originating from solar exchangers or from a capacity containing a hot fluid for unsticking ice from the surfaces of the exchanger, circulates.

**Ansprüche**

1. Durch zwei parallele Flächen begrenzter Wärmetauscher mit einem Bündel aus metallischen parallelen Rohren, die derart miteinander verbunden sind, daß sir einen Kreislauf für ein erstes Fluid bilden, und die mit wenigstens einem Bündel aus metallischen langgestreckten Elementen verschachtelt sind, das in thermischer Berührung mit den Rohren (10) und mit einem zweiten Fluid steht und mit den Rohren eine Lage bildet, dadurch gekennzeichnet, daß die Rohre (10) einen rechteckigen Querschnitt haben und mit den langgestreckten aneinandergrenzenden Elementen (11a, 11b) über die gesamte Oberfläche von ebenen einander gegenüberliegenden Flächen der Rohre und der Elemente in Berührung stehen, und daß die Rohre (10) und die langgestreckten Elemente (11a, 11b) aus Stahl bestehen, gegen von außen kommende Korrosion geschützt sind und durch eine Feuerverzinkung untereinander thermisch verbunden sind, die zwischen den Rohren und den langgestreckten Elementen eine metallurgische Verbindung herstellt.

2. Wärmetauscher nach Anspruch 1, dadurch gekennzeichnet, daß der Wärmetauscher für den Wärmeübergang mit wenigstens einem zusätzlichen Fluid (Fluid C oder D) dient, das um den Wäremtauscher oder in einem Bündel aus zusätzlichen Rohren zirkuliert, die mit den metallischen Elementen verschachtelt sind.

3. Wärmetauscher nach Anspruch 1 oder 2, dadurch gekennzeichnet, daß die parallelen Flächen eben und im Betrieb im wesentlichen senkrecht sind.

4. Wärmetauscher nach Anspruch 1 oder 2, dadurch gekennzeichnet, daß die parallelen Flächen des Wärmetauschers im wesentlichen senkrecht und wenigstens teilweise zylindrisch sind, so daß eine U-förmige oder zylindrische Anordnung entsteht, wobei die Rohre und die langgestreckten Elemente schraubenförmig gewickelt sind.

5. Wärmetauscher nach einem der vorhergehenden Ansprüche, dadurch gekennzeichnet, daß die langgestreckten Elemente rechteckige zusätzliche Rohre aufweisen, die dem Wärmetauscher die Förderung von mehr als zwei Fluiden gestattet.

6. Wärmetauscher nach einem der vorhergehenden Ansprüche, dadurch gekennzeichnet, daß die langgestreckten Elemente Stege aus Profilmaterial oder gefaltetem Blech (11b) aufweisen, die zwei ebene mit den angrenzenden Rohren in Verbindung stehende Flächen haben.

7. Wärmetauscher nach einem der vorhergehenden Ansprüche, der bei Gebrauch im wesentlichen senkrecht angeordnet sein soll, dadurch gekennzeichnet, daß Mittel vorgesehen sind, durch die auf den senkrechten Flächen Eis gebildet wird, dessen latente Wärme einem thermodynamischen Kreislauf zugeführt wird, für den der Kreislauf des ersten Fluids einen Verdampfer bildet.

8. Wärmetauscher nach einem der vorhergehenden Ansprüche mit senkrechten Flächen, dadurch gekennzeichnet, dab er an seinem Oberteil einen Kanal aufweist, der dazu bestimmt ist, die senkrechten Flächen des Wärmetauschers mit Rieselwasser Während der Perioden zu speisen, in denen auf den Flächen Eis gebildet werden soll.

9. Wärmetauscher nach Anspruch 8, der in eine Heizanlage mit Wärmepumpe eingebaut Ist, von der er den Verdampfer bildet, der auf einem das erste Fluid bildenden thermodynamischen Fluid durchströmt wird, dadurch gekennzeichnet, daß die zweiten Rohre in einem Kreislauf angeordnet sind, der von einem gefrierfesten Wärmeübertragungsfluid durchströmt wird, das von Sonnenwärmetauschern oder von einem Raum stammt, der ein warmes Fluid enthält, das dazu bestimmt ist, das Eis der Oberflächen des Wärmetauschers abzulösen.

# FIG.1.

10   11a   10

# FIG.2.

10   11b   11a

10   11a   12   10

15

# FIG.3.

14

11b   13

A
(eau glycolée)

$H_2O$

18

D
($H_2O$)

C

B

# FIG.4.

10   11a   19

17

22

16

15   20

22

1

FIG.6.

FIG.5.

FIG.9.

FIG.7.

FIG.8.

FIG. 10

FIG. 11.

4